Europäisches Patentamt

European Patent Office

Office européen des brevets

(19)

(11) Publication number: **0 048 770**
**B1**

## EUROPEAN PATENT SPECIFICATION

(45) Date of publication of patent specification: **23.11.83**

(21) Application number: **80105921.3**

(22) Date of filing: **30.09.80**

(51) Int. Cl.³: **C 25 C 3/12,** C 25 B 11/12,
C 25 C 7/02, C 01 B 31/04,
C 10 B 33/00

(54) Suction device for removing packing coke from baking chambers for carbon bodies.

(43) Date of publication of application:
**07.04.82 Bulletin 82/14**

(45) Publication of the grant of the patent:
**23.11.83 Bulletin 83/47**

(84) Designated Contracting States:
**DE FR GB IT**

(56) References cited:
**DE - A - 2 824 484**
**DE - B - 1 757 656**
**GB - A - 1 461 351**

(73) Proprietor: **Ardal og Sunndal Verk a.s.**
**Sörkedalsveien 6**
**Oslo 3 (NO)**

(72) Inventor: **Landmark, Jonas Rein**
**Haresvingen 12**
**N-1347 Hosle (NO)**
Inventor: **Schneider, Paul Adrian**
**Huk Aveny 48**
**Oslo (NO)**

(74) Representative: **Patentanwälte Zellentin**
**Zweibrückenstrasse 15**
**D-8000 München 2 (DE)**

Courier Press, Leamington Spa, England.

## Suction device for removing packing coke from baking chambers for carbon bodies

This invention relates to cranes for use in connection with furnaces for baking or calcining carbon bodies, which bodies are to be used in furnaces for electro-thermal processes or in cells for the electrolytic reduction of metal oxides to metals. More specifically, the invention relates to a method of drawing off, by suction, coke from a so-called ring-chamber baking furnace, and equipment for realizing this method in practice.

In the following, by way of example, the method will be described as applied in connection with the production of carbon bodies for the electrolytic reduction of alumina to aluminium, but it will be understood that the method and apparatus can be applied to the production of carbon bodies for other processes as mentioned above.

The carbon bodies which are used in cells for producing aluminium are made from a mixture, or paste, consisting of calcined anthracite, petroleum coke and pitch, in proportions varying with the raw materials and the purpose which the carbon body is to serve. The pitch acts as a binding agent.

Carbon bodies for use in furnaces for electro-thermal processes, in linings and/or as electrodes, are made from other mixtures, but along the same principles.

As it comes out of the mixing machine, this paste is firm at room temperature, becomes softer around 100—150°C, and at higher temperatures the volatile components will be driven off and the binding agent carbonized, whereby the paste becomes stiff and hard. This thermal treatment is referred to as baking. The baking of, for example, an anode in an electrolytic reduction cell can be effected by the heat generated by the process, but today it is normally preferred to perform this baking in separate furnaces, as this allows better control over the baking process and thus the properties of the finished product.

The carbon bodies which are placed into a furnace of this type for baking are often referred to as "green carbons" (in which "green" indicates that they are "unripe"). The green carbons are produced by pressing or vibrating, and can be of considerable size. Cathode carbons, for electrolytic reduction cells for producing aluminium, for example, can measure $700 \times 900 \times 4000$ mm, and weigh some 4 metric tons. It is clear that when such a body is heated up and passes through a temperature zone in which it becomes soft, it will become deformed unless special steps are taken. For this reason, the green carbons are placed in high pits in the chambers, which pits are built of refractories, and the space between the carbons and the pit walls are filled with coke breeze, which will also protect the green carbons against combustion.

A certain number of pits form a chamber, and a number of chambers are built together to form a ring furnace with or without a separate lid over each chamber. In the following, the description and the method of operation is based on a ring-chamber furnace with lids, but the equipment can also be used in connection with ring-chamber furnaces without lids.

Hot combustion gases are led into a chamber. They flow through hollow refractory pit walls and from there on to the next chamber. The firing zone moves through the entire furnace, thereby making the best possible use of the heat. The baking of the green carbons is completed successively, and the chambers containing the finished carbons must be allowed to cool for some time before the packing coke can be removed and the finished carbons lifted out. During baking, the temperature reaches 1280°C, and the entire cycle takes about 3 weeks.

Ring-chamber furnaces are large. Cranes over such furnaces can, for example, have a reach of over 30 metres, and the plant is expensive. It is therefore necessary to make effective use of expedient aids.

The physical work involved in operating a ring-chamber furnace refers mainly to the emptying of the chambers at the end of the cycle, and filling the chambers with green carbons and packing coke for the next cycle.

The emptying of the chambers is started by lifting off the lid of the individual chamber, and then drawing off the packing coke by suction in order to gain access to the baked carbon.

The drawing-off of the packing coke is usually performed by lowering a suction tube down into the packing coke. This tube is normally suspended in a crane and is telescopically connected with the silo and the suction connection (fitting) on the crane bridge. The tube is lowered down into the loose coke mainly by its own weight, and is often guided manually by handles welded on to the tube.

In a fairly large baking furnace, with an annual capacity of 36,000 metric tons of calcined carbon bodies, it is necessary to draw off daily some 33 tonnes of packing coke which has a temperature of some 250°C.

A previous method of doing this was based on a vacuum line installed around the furnace to which a flexible hose could be connected. This hose was connected to a transportable container, which in turn was connected to a suction tube which the operator lowered down into the pit to be emptied. The container had a capacity of some 5 tonnes of coke, and when it was full, it was taken away by crane for emptying.

The applicant has found that the whole of this operation can be made more efficient by installing the container—a silo—under the crane which is connected to a vacuum plant. When the silo is full, the crane can be driven over to a pit which is to be filled with coke, and the coke released down through bottom tapping. If the crane has a vacuum plant, an excellent exhaust draught can be established around the exit orifice, thus drawing off any coke dust caused by this emptying process.

A vacuum pump with the capacity required here, together with a centrifuge to remove coke dust from the hot transport air proved such a large installation that it was not possible in practice to mount this on the crane bridge.

Several possibilities for connecting the vacuum system on the movable crane bridge to a stationary vacuum centre in the building were tested until the final solution was found.

In principle, the arrangement consists of a sliding box, flexibly mounted on the crane bridge, which box, which is open at the bottom, slides on top of a fixed vacuum duct or line which runs parallel with the crane bridge track. The vacuum line is equipped with valves which are opened automatically by the sliding box, and in this manner the sliding box is always connected to the vacuum line through at least one orifice. The valves are closed automatically when the sliding box is driven away from them.

The system will be described below in more detail with reference to the drawings.
It shows:

Figure 1 the sliding box over the duct of the vacuum line, seen across its direction of travel.

Figure 2 a section of the duct with the sliding box.

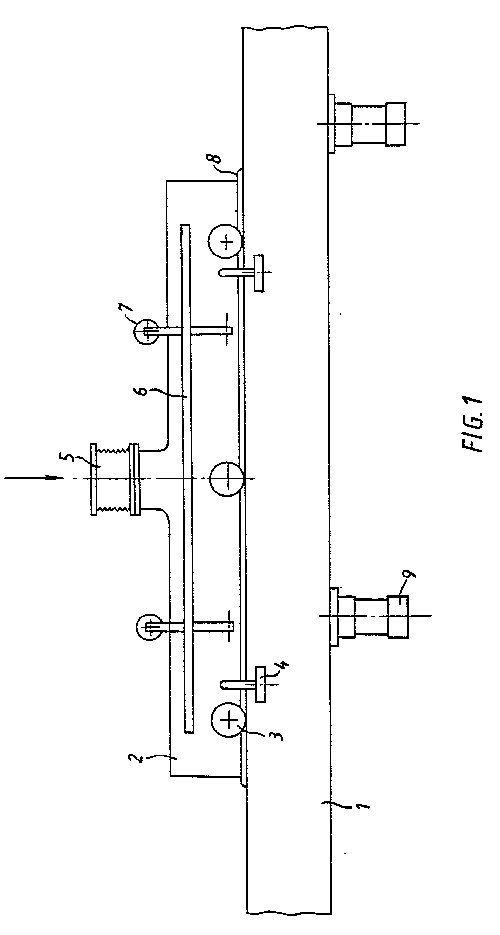

In figure 1, 1 is a duct, which is part of a vacuum line, 2 is a sliding box, which is open at the bottom, 3 are supporting wheels to prevent the box 2 from being clamped by vacuum against the duct 1, 4 are guide wheels to hold the box in position, 5 is a flexible coupling which connects the sliding box 2 on the duct 1 to the cyclone(s) and silo on the crane (not shown), 6 is an activating rail for opening vacuum valves 12, 7 are activators for the activating rail 6, 8 is a sliding gasket and 9 are pneumatic cylinders for opening and closing the vacuum valves 12. The duct 1 has a slide surface in which there are disposed the valves 12.

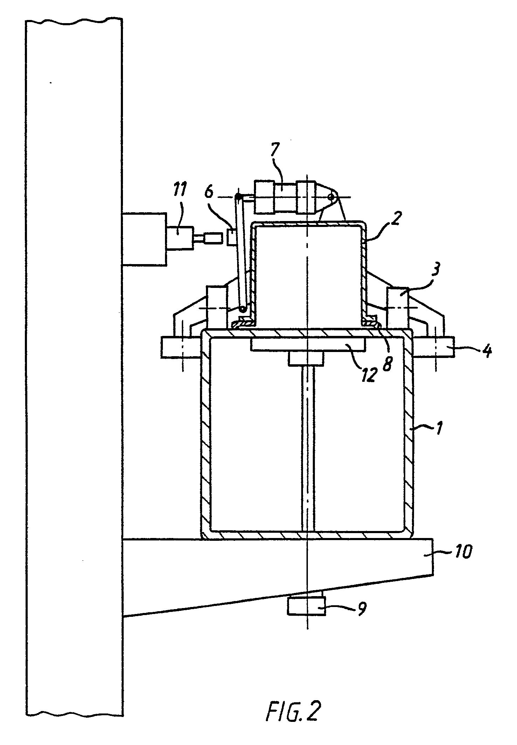

Figure 2 shows a section of the sliding box 2 over the duct 1, which is mounted on a bracket 10. We recognize the supporting wheels 3 and guiding wheels 4 on the sliding box 2, which is sealed by means of the sliding gasket 8. The sliding gasket 8 consists of a rubber skirt in which is inserted a body which slides along the vacuum duct 1, of a material with a low co-efficient of friction, for example Teflon®. Similarly, we see one of the activators 7 which activates the activating rail 6. This activating rail 6 will, in its activated state, activate a control valve 11, which in turn activates the pneumatic cylinder 9. When this cylinder 9 is activated, it will open valve 12, whereby the vacuum system on the crane bridge is connected to the stationary vacuum plant.

Activating rail 6 is made long enough to ensure that it will operate at least one vacuum valve 12, ensuring that vacuum will always be connected by the crane driver through activator 7. When the crane is driven away, the vacuum valve(s) 12 which has (have) been opened will be automatically closed, as there is no contact between the activating rail 6 and the control valve 11, which activates the pneumatic cylinder to open the valves 12.

The supporting wheels 3 are necessary, as they prevent the sliding box 2 from being clamped firmly to the duct 1, whilst the sliding gasket 8 ensures a vacuum-tight connection between the sliding box 2 and the duct 1.

**Claim**

Suction device for removing packing coke from baking chambers for carbon bodies, in which the baking chambers are served by a mobile crane running on a track, which crane is equipped with suction pipe and silo and in which the vacuum for the suction pipe is produced by a stationary plant and conveyed to the suction device from a closed duct (1) which runs parallel with one of the rails of the crane track, to a sliding box (2) mounted on the crane, characterized in that the duct (1) has a slide surface in which there are disposed valves (12) which are opened by pneumatic cylinders (9) when an activating rail (6), mounted on the sliding box (2) passes the valves (12) in the vacuum duct (1), and in that the sliding box (2) rolls on wheels (3) and is fitted with guide wheels (4), and further in that the box (2) is fitted with a sliding gasket (8), consisting of a rubber skirt inserted into which there is a body which slides along the vacuum duct (1) of a material with a low co-efficient of friction.

**Revendication**

Aspirateur pour enlever le coke de chargement de chambres de chauffage pour corps carbonés, dans lequel les chambres de chauffage sont desservies par une grue mobile se déplaçant sur une voie, cette grue étant équipée d'une conduite d'aspiration et d'un silo et dans laquelle le vide pour la conduite d'aspiration est produit par une installation stationnaire et refoulé vers l'aspirateur par l'intermédiaire d'une conduite (1) fermée parallèle à un des rails de la voie de la grue et d'un coffre de glissement (2) fixé à la grue, caractérisé par le fait que la conduite (1) présente une surface de glissement dans laquelle sont placées des soupapes (12) qui sont ouvertes à l'aide de cylindres pneumatiques (9), dans le cas où un rail d'activation (6) fixé au coffre de glissement (2) passe devant les soupapes (12) prévues dans la conduite à vide (1), par le fait que le coffre de glissement (2) se déplace sur des roues (3) et qu'il est équipé de roues de guidage (4) et par le fait en outre que le coffre de glissement (2) est muni d'un joint de glissement (8) composé d'un entourage en caoutchouc dans lequel est placé un corps qui glisse le long de la conduite à vide (1) et qui est fabriqué dans un matériau dont le coefficient de frottement est faible.

**Patentanspruch**

Absaugvorrichtung zur Entfernung von Packungskoks aus Brennkammern für Kohlekörper, bei der die Brennkammern von einem beweglichen Kran bedient werden, der sich auf einem Gleis bewegt, wobei dieser Kran mit einem Absaugrohr und einem Silo ausgestaltet ist, und bei der das Vakuum für das Absaugrohr mittels einer stationären Anlage erzeugt und über eine parallel zu einer der Schienen des Krangleises verlaufende geschlossene Leitung (1) und einen an dem Kran befestigten Gleitkasten (2) zur Absaugvorrichtung gefördert wird, dadurch gekennzeichnet, daß die Leitung (1) eine Gleitfläche aufweist, in der Ventile (12) angeordnet sind, die mit Hilfe von pneumatischen Zylindern (9) geöffnet werden, falls eine an dem Gleitkasten (2) befestigte Aktivierungsschiene (6) sich an den in der Vakuumleitung (1) vorgesehenen Ventilen (12) vorbeibewegt, daß der Gleitkasten (2) sich auf Rädern (3) bewegt sowie mit Führungsrädern (4) ausgestaltet ist und daß weiterhin der Gleitkasten (2) mit einer Gleitdichtung (8) versehen ist, die aus einer Gummieinfassung besteht, in die ein Körper eingesetzt ist, der entlang der Vakuumleitung (1) gleitet und aus einem Material mit einem niedrigen Reibungskoeffizienten besteht.

FIG.1

FIG. 2